# EUROPÄISCHE PATENTSCHRIFT

(11) **EP 2 880 741 B1**
(45) Veröffentlichungstag und Bekanntmachung des Hinweises auf die Patenterteilung: **22.06.2016**
(21) Anmeldenummer: 13753086.1
(22) Anmeldetag: 31.07.2013
(51) Int. Cl.: H02K 1/14, H02K 21/12, H02K 21/24, H02K 21/14, H02K 15/02, H02K 29/03

(54) **STATOR FÜR EINE ELEKTRISCHE MASCHINE, ELEKTRISCHE MASCHINE SOWIE VERFAHREN ZUM ZUSAMMENBAUEN EINER ELEKTRISCHEN MASCHINE**
STATOR FOR AN ELECTRICAL MACHINE, ELECTRICAL MACHINE AND METHOD FOR ASSEMBLING AN ELECTRICAL MACHINE
STATOR POUR UNE MACHINE ÉLECTRIQUE, MACHINE ÉLECTRIQUE ET PROCÉDÉ POUR L'ASSEMBLAGE D'UNE MACHINE ÉLECTRIQUE

(30) Priorität: 03.08.2012 DE 102012015210
(43) Veröffentlichungstag der Anmeldung: 10.06.2015
(60) Teilanmeldung: 16169686.9
(73) Patentinhaber: GKN Sinter Metals Holding GmbH, 42477 Radevormwald (DE)
(72) Erfinder: PÜTZ, Thomas, 53501 Grafschaft (DE); SCHMITT, Rainer, 53343 Wachtberg (DE); AYDIN, Ümit, 53343 Wachtberg (DE); CASELLAS, Antonio, 53721 Siegburg (DE)
(74) Vertreter: KNH Patentanwälte
(86) Internationale Anmeldenummer: PCT/EP2013/002261
(87) Internationale Veröffentlichungsnummer: WO 2014/019688

(56) Entgegenhaltungen:
- EP-A1- 1 211 786
- EP-A2- 1 870 983
- EP-A2- 2 381 559
- WO-A1-2012/084905
- GB-A- 2 139 822
- US-A1- 2002 185 931
- US-A1- 2008 100 172
- US-A1- 2012 068 568
- US-B1- 6 756 719
- US-B2- 6 657 329

## Beschreibung

Die Erfindung betrifft einen Stator für eine zusammensetzbare elektrische Maschine mit wenigstens einem Rotor, wobei der Stator als mit wenigstens einem Durchbruch versehene Scheibe ausgebildet ist. Weiterhin betrifft die Erfindung eine elektrische Maschine sowie eine Verfahren zum Zusammenbauen einer rohrförmigen elektrischen Maschine.

Es ist bekannt, elektrische Maschinen aus einem Rotor, den Rotor umgebenden Statoren sowie eine den Rotor umgebene Wicklung, zumeist aus mit Isoliermaterial versehenen Kupferdraht, zu konstruieren. Ein Beispiel für solche elektrische Maschinen sind Transversalflussmaschinen. Solche elektrische Maschinen können jedoch den Nachteil aufweisen, dass die Leistungsdichte bauartbedingt gegenüber einem theoretischen Optimalwert reduziert ist. Gründe hierfür können unter anderem darin liegen, dass die Wicklungen Wickelköpfe aufweisen und/oder in fertigungstechnologisch begründeten Toleranzen begründet sein.

Statorkonstruktionen nach dem Oberbegriff des Anspruchs 1 sind z. B. aus EP-A-1 211 786, EP-A-1 870 983, GB-A-2 139 822, US-B-6 657 329 und US-B-6 756 719 bekannt. Ein weiterer Stator ist in EP-A-2 381 559 beschrieben.

Der Erfindung liegt die Aufgabe zu Grunde, die Leistungsdichte solcher elektrischer Maschinen zu erhöhen.

Die Aufgabe wird mit einem Stator für eine zusammensetzbare elektrische Maschine mit den Merkmalen des Anspruchs 1, mit einer elektrischen Maschine mit den Merkmalen des Anspruchs 11 sowie mit einem Verfahren zum Zusammenbauen einer elektrischen Maschine mit den Merkmalen des Anspruchs 15 gelöst. Weitere vorteilhafte Ausgestaltungen und Weiterbildungen gehen aus der nachfolgenden Beschreibung hervor. Ein oder mehrere Merkmale aus den Ansprüchen, der Beschreibung wie auch den Figuren können mit ein oder mehreren anderen Merkmalen daraus zu weiteren Ausgestaltungen der Erfindung verknüpft werden. Insbesondere können auch ein oder mehrere Merkmale aus den unabhängigen Ansprüchen durch ein oder mehre Merkmale aus der nachfolgenden Beschreibung ersetzt werden. Der vorgeschlagene Gegenstand ist nur als ein erster Entwurf zur Formulierung des Gegenstands aufzufassen, ohne diesen jedoch zu beschränken.

Die Erfindung betrifft also einen Stator für eine zusammensetzbare elektrische Maschine vorgesehen. Die elektrische Maschine soll hierbei wenigstens einen Rotor aufweisen. Es ist vorgesehen, dass der Stator als mit wenigstens einem Durchbruch versehener Körper ausgebildet ist, wobei der Stator wenigstens einen ferromagnetischen Werkstoff aufweist. Weiterhin ist vorgesehen, dass der Stator aufweist:
- wenigstens einen als Statorpolträger ausgebildeten Bereich, welcher wenigstens teilweise eine Mittelachse des Stators umringt.
- wenigstens einen ersten Statorpol mit wenigstens einer ersten Flanke und einer zweiten Flanke, sowie
- wenigstens einen zweiten Statorpol.

Hierbei sind die Statorpole unmittelbar oder mittelbar an dem Statorpolträger angeordnet.

Erfindungsgemäß ist vorgesehen, dass zur Bereitstellung eines ortsabhäng eingestellten magnetischen Widerstands die Dichte des Materials, aus dem der Stator gefertigt ist, ortsabhängig eingestellt. Hierdurch kann erreicht werden, dass auch bei Verwendung eines gleichen Materials für den Stator lediglich durch Veränderung der Dichte dieses Materials die ferromagnetische Permeabilität hält und hierdurch unmittelbar der ferromagnetische Widerstand eingestellt werden können. Eine Einstellung des ferromagnetischen Widerstands hat wiederum zur Folge, dass der Verlauf der Magnetfeldlinien innerhalb des Stators so eingestellt werden kann, dass dieser einen Verlauf entsprechend dem Prinzip der Energieminimierung einnimmt.

Beispielsweise kann vorgesehen sein, dass bei Ausgestaltung des Stators als Stator aus einem Werkstoff mit einer theoretischen Dichte von 7,7 g cm⁻³ jeder Statorpol im arithmetischen Mittel eine Dichte von 7,5 g cm⁻³ aufweist, während der als Statorpolträger vorgesehene Bereich im arithmetischen Mittel eine Dichte von 7,2 g cm⁻³ aufweist, wobei als theoretische Dichte die Dichte eines als perfekt gedachten Einkristalls des verwendeten weichmagnetischen Materials bezeichnet ist.

In einer Ausgestaltung des Stators kann vorgesehen sein, dass der als Statorpolträger ausgebildete Bereich die Mittelachse des Stators vollständig umringt.

In einer Ausgestaltung ist vorgesehen, dass die Statorpole im Wesentlichen entlang einer Radialrichtung weisend gerichtet an dem Statorpolträger angeordnet sind.

Der Begriff der elektrischen Maschine bezeichnet beispielsweise eine Maschine, welche elektrische Energie in mechanische Energie oder mechanische Energie in elektrische Energie wandelt . Beispielsweise kann eine solche elektrische Maschine ein Motor und/oder Generator sein. Ein anderes Beispiel für eine elektrische Maschine ist beispielsweise ein Transformator zur ausschließlichen Umwandlung von elektrischer Energie.

Es kann insbesondere vorgesehen sein, dass die elektrische Maschine ein Transversalflussgenerator ist. Weiterhin kann vorgesehen sein, dass die elektrische Maschine ein Transversalflussmotor ist.

Es ist insbesondere vorgesehen, dass der Stator als Stator für eine elektrische Maschine in Ausbildung einer elektrischen Maschine zur Umwandlung von elektrischer Energie in mechanische Energie vorgesehen ist. Insbesondere ist vorgesehen, dass der Stator als Stator für eine rotierende elektrische Maschine vorgesehen ist, welche für eine Umformung von elektrischer Energie in eine rotatorische Bewegung vorgesehen ist. Es kann jedoch ebenfalls vorgesehen sein, dass - als Grenzfall einer rotierenden elektrischen Maschine mit einem unendlich großen Krümmungsradius - der Stator als Stator für eine elektrische Maschine mit translatorischer Bewegung, als so genannter "elektrischer Linearmotor", vorgesehen ist.

Der Begriff des Rotors kann beispielsweise einen scheibenförmigen Körper bezeichnen, welcher, lösbar oder unlösbar, mit einer Welle verbunden ist. Der Rotor kann hierbei beispielsweise als Scheibe mit einer kreisförmigen Grundfläche ausgestaltet sein, an welcher in einem rechten Winkel zur Oberfläche dieser Grundfläche eine Welle angeordnet ist.

Der Stator ist als ein mit einem Durchbruch versehener Körper vorgesehen. Als Durchbruch wird sich hierbei auf ein den Körper vollständig von einer Seite zu einer anderen Seite durchlaufendes Loch bezogen. Der Durchbruch dient dabei einerseits einer möglichen Durchführbarkeit der Welle sowie andererseits einer Trennung des wenigstens ersten Statorpols von dem wenigstens zweiten Statorpols. Es kann weiterhin vorgesehen sein, dass der Stator wenigstens zwei Durchbrüche aufweist. In einer Ausgestaltung kann vorgesehen sein, dass der Körper als scheibenähnlicher Körper ausgebildet ist. Eine Ausbildung eines Körpers als scheibenähnlicher Körper bezeichnet hierbei einen Körper, welcher in zwei zueinander orthogonalen Richtungen des Raumes unterschiedliche Größenordnungen der Ausdehnung aufweist. Beispielsweise kann vorgesehen sein, dass der Körper als scheibenähnlicher Körper mit einer im wesentlichen kreisförmigen Grundfläche ausgebildet ist. Hierbei kann insbesondere vorgesehen sein, dass die Höhe des Körpers geringer ist als der Radius des scheibenähnlichen Körpers. Die Bezeichnung einer schreibenähnlichen Ausbildung bezieht sich hierbei darauf, dass eine äußere Mantelfläche sowie deren Begrenzungslinien einen scheibenähnlichen Körper umschreiben; es ist oder kann jedoch außerdem mit umfasst sein, dass in einem Inneren des Körpers weitere Strukturen und/oder Durchbrüche angeordnet sind.

Der Begriff des ferromagnetischen Werkstoffs bezeichnet Werkstoffe, welche eine signifikante ferromagnetische Suszeptibilität aufweisen, die deutlich größer als 1 ist. Insbesondere können als ferromagnetische Werkstoffe Eisen, Nickel, Kobalt oder Legierungen, welche Eisen, Nickel und/oder Kobalt aufweisen, umfassen. Weitere Beispiele sind beispielsweise ferritische Stähle sowie nicht gesinterte und/oder gesinterte ferromagnetische Werkstoffe. Der Stator kann hierbei einen ferromagnetischen Werkstoff aufweisen oder auch mehr als einen ferromagnetischen Werkstoff aufweisen. Hierbei können unterschiedliche ferromagnetische Werkstoffe als homogenes oder heterogenes Gemenge angeordnet sein, es kann jedoch auch eine unregelmäßige oder regelmäßige Anordnung von ferromagnetischen Werkstoffen und/oder ferromagnetischen und nicht nichtferromagnetischen Werkstoffen dem Stator umfasst sein.

Der Begriff des Statorpolträgers bezeichnet einen Bereich des Stators, an welchem eine Anordnung der Statorpole vorgesehen ist. Hierbei kann beispielsweise vorgesehen sein, dass ein Umfang des Stators als Statorpolträger fungiert. Es ist vorgesehen, dass die Statorpole an dem Statorpolträger und von diesem weggerichtet angeordnet sind. Hierbei ist vorgesehen, dass die Statorpole im Wesentlichen entlang einer Radialrichtung weisend gerichtet sind. Die Begrifflichkeit einer im Wesentlichen entlang einer Radialrichtung gerichteten Orientierung umfasst insbesondere, dass die Statorpole wenigstens Bereiche umfassen, welche zu der Mittelachse des Stators hin gerichtet sind und/oder die Statorpole wenigstens Bereiche umfassen, welche von der Mittelachse des Stators wegweisend gerichtet sind. Beispielsweise kann vorgesehen sein, dass eine Anzahl von Statorpolen im Wesentlichen zu der Mittelachse des Stators hin gerichtet ist und eine Anzahl von weiteren Statorpolen im Wesentlichen von der Mittelachse des Stators weggerichtet ist. Weiterhin kann vorgesehen sein, dass alle Statorpole, welche von dem Stator umfasst werden, im Wesentlichen zu der Mittelachse des Stators hin gerichtet sind. In einer weiteren Ausgestaltung eines Stators kann vorgesehen sein, dass alle Statorpole von der Mittelachse des Stators wegweisend gerichtet sind. In einer Ausgestaltung des Stators als Körper mit einer kreisförmigen Grundfläche entspricht die Mittelachse des Stators der Rotationsachse dieses Körpers. In Fällen, in welchem der Stator keine kreisförmige Grundfläche aufweist, kann vorgesehen sein, dass die Mittelachse als Schwerpunkt, beispielsweise als geometrische Schwerpunkt, der Grundfläche des Stators ausgebildet ist.

Es ist vorgesehen, dass die Statorpole an dem Statorpolträger angeordnet sind. Hierbei können die Statorpole beispielsweise unmittelbar an dem Statorpolträger angeordnet sein, es kann jedoch beispielsweise ebenfalls vorgesehen sein, dass die Statorpole mittels eines Zwischenbereichs oder mehrerer Zwischenbereiche an dem Statorpolträger angeordnet sind. Dieser Zwischenbereich kann sich beispielsweise in einem Querschnitt und/oder einem Material von dem dann angrenzenden Statorpol und/oder Statorpolträger unterscheiden. Eine Anordnung der Statorpole an den Statorpolträgern kann hierbei stoffschlüssig oder nicht stoffschlüssig vorgesehen sein.

Es kann weiterhin vorgesehen sein, dass der Stator als Stator für eine reversibel zusammensetzbare elektrische Maschine ausgebildet ist.

In einer weiteren Ausgestaltung des Stators ist vorgesehen, dass der erste Statorpol zu jeder die Mittelachse des Stators enthaltenden Ebene asymmetrisch ist und mit zunehmendem Abstand von dem Statorpolträger sich von dieser Ebene im Wesentlichen fortbiegend gekrümmt ist.

Eine solche asymmetrische Konfiguration eines Statorpols, mehrerer Statorpole und/oder aller Statorpole hat unter anderem Auswirkungen auf den Drehmomentverlauf während jeweiliger Umdrehungen des Rotors einer elektrischen Maschine zur Folge. Somit ist es beispielsweise möglich, ein Drehmomentprofil innerhalb jeweils einer vollständigen Umdrehung des Rotors maßzuschneidern. Beispielsweise kann vorgesehen sein, dass die asymmetrische Anordnung eines Statorpols, mehrerer Statorpole und/oder aller Statorpole durch Auslegung dahingehend optimiert werden kann, dass eine Umwandlung einer Drehbewegung in eine lineare Bewegung bewirkt wird.

In einer weiteren Ausgestaltung des Stators ist die erste Flanke und/oder die zweite Flanke über wenigstens einen Höhenbereich des ersten Statorpols gegenüber der Mittelachse des Stators abgeschrägt. Die Abschrägung ist hierbei in diskretem oder kontinuierlichem Verlauf oder einer Kombination aus beidem ausgebildet.

In einer Ausgestaltung des Stators, in welcher beide Flanken wenigstens eines Statorpols abgeschrägt sind, kann diese Abschrägung an beiden Flanken gleich oder unterschiedlich sein. Des weiteren kann vorgesehen sein, dass die Abschrägung an der ersten Flanke und die Abschrägung an der zweiten Flanke mit zunehmender Nähe der der Abschrägung näheren Stirnseite des Stators zu einer Verjüngung des Statorpols führt. In einer anderen Ausgestaltung des Stators kann vorgesehen sein, dass die Abschrägung an der ersten Flanke und die Abschrägung an der zweiten Flanke mit zunehmender Nähe der der Abschrägung näheren Stirnseite des Stators zu einer Verbreiterung des Statorpols führt. Weiterhin kann möglich sein, dass die Breite des Stators in zu der Mittelachse des Stators senkrechter Richtung trotz Abschrägung an beiden Flanken konstant bleibt aufgrund von Parallelität der ersten Flanke und der zweiten Flanke.

Vorteil einer Abschrägung der ersten Flanke und/oder der zweiten Flanke des ersten Statorpols gegenüber der Mittelachse des Stators ist beispielsweise, dass ein einer Bewegung eines Rotors entgegenwirkendes Rastmoment reduziert oder gar vermieden, das heißt auf einen Wert von nahezu Null reduziert wird. Bei Betrachtung eines Abschrägewinkels gegenüber einer die Mittelachse des Staates enthaltenen Ebene kann eine Abschrägung insbesondere als Abschrägung mit Abschrägewinkeln von weniger als 10° vorgesehen sein. Insbesondere kann vorgesehen sein, dass der Abschrägewinkel weniger als 5° beträgt. In einer bevorzugten Ausführungsform sind Abschrägewinkel von weniger als 2°, besonders bevorzugt von etwa 0,9°-1,0°, vorgesehen.

In einer weiteren Ausgestaltung des Stators kann beispielsweise vorgesehen sein, dass das Verhältnis eines entlang einer Axialrichtung gerichteten, mit einer Abschrägung versehenen Höhenbereichs zu einer in eine Axialrichtung gerichteten Gesamthöhe 1:4 beträgt.

In einer weiteren Ausgestaltung kann vorgesehen sein, dass mit einer Abschrägung versehene Statorpole regelmäßig abwechselnd mit ohne Abschrägung versehene Statorpole an dem Stator angeordnet sind.

Weiterhin kann vorgesehen sein, dass einer oder mehrere Statorpole auf nur einer einzigen Stirnseite des Stators Abschrägungen aufweisen. In einer anderen Ausgestaltung kann hingegen beispielsweise vorgesehen sein, dass die Statorpole auf beiden Stirnseiten des Stators Abschrägungen aufweisen.

In einer weiteren Ausgestaltung des Stators korrespondiert wenigstens eine stirnseitige Schnittfläche des ersten Statorpols mit wenigstens einer stirnseitigen Schnittfläche eines hartmagnetischen Bereichs des Rotors.

In einer Ausgestaltung des Stators kann vorgesehen sein, dass eine korrespondierende stirnseitige Schnittfläche des ersten Statorpols wenigstens bereichsweise mit einer stirnseitigen Schnittfläche eines hartmagnetischen Bereichs des Rotor im Wesentlichen identisch ist. In einer speziellen Ausgestaltung ist die stirnseitige Schnittfläche des ersten Statorpols mit wenigstens einer stirnseitigen Schnittfläche eines hartmagnetischen Bereichs des Rotor identisch, wobei identisch im Sinne von weitgehend deckungsähnlich zu verstehen ist. Ein Vorteil einer weitgehend deckungsähnlichen Ausführung einer stirnseitigen Schnittfläche des ersten Statorpols mit einer stirnseitigen Schnittfläche des hartmagnetischen Bereichs des Rotors ist beispielsweise, dass der Rastmoment reduziert wird. Ein weiterer Vorteil kann darin bestehen, dass in einem Betrieb einer den Stator aufweisenden elektrischen Maschine nahezu ein idealer sinusförmiger Spannungsverlauf erreicht wird, so dass ein zusätzliches Filtern des Spannungsverlaufs nicht mehr vonnöten ist.

Beispielsweise kann vorgesehen sein, dass eine senkrecht zu einer Längsachse des Stators senkrechte Schnittfläche des ersten Statorpols mit wenigstrens einer stirnseitigen Schnittfläche eines hartmagnetischen Bereichs des Rotors korrespondiert und dass die Schnittfläche eine axiale Erstreckung des Stators halbiert.

Weiterhin kann beispielsweise vorgesehen sein, dass jeder Statorpol des Stators mit einer stirnseitigen Schnittfläche eines hartmagnetischen Bereichs des Rotors korrespondiert. Hierbei kann vorgesehen sein, dass zusätzlich zu einer Korrespondenz einer stirnseitigen Schnittfläche auch die relative Position der Statorpole des Stators zueinander mit der relativen Position der hartmagnetischen Bereiche zueinander korrespondiert.

In einer weiteren Ausbildung des Stators ist vorgesehen, dass ein Bereich des Stators, der die Mittelachse des Stators wenigstens teilweise umringt, eine gegenüber wenigstens einem an diesen Bereich angrenzenden Nachbarbereich verringerte Höhe zur zumindest teilweisen Aufnahme von wenigstens einer Wicklung aufweist. Beispielsweise kann vorgesehen sein, dass eine umlaufende Nut in einem Bereich zwischen der Mittelachse des Stators und dem Statorpolträger vorgesehen ist. Insbesondere kann vorgesehen sein, dass eine teilweise umlaufende Nut oder eine vollständig umlaufende Nut in einem

Bereich zwischen den Statorpolen und dem Statorpolträger vorgesehen ist, so dass Raum zur Verfügung gestellt wird, welcher für eine Aufnahme einer Wicklung geeignet ist und diese Wicklung sodann die Statorpole wenigstens bereichsweise sowie den Rotor, ebenfalls zumindest bereichsweise, umfassen kann.

In einer weiteren Ausbildung des Stators kann vorgesehen sein, dass der Statorpolträger wenigstens bereichsweise wenigstens eine Aussparung und/oder wenigstens einen Vorsprung aufweist. Hierbei kann vorgesehen sein, dass die Aussparung und/oder der Vorsprung bevorzugt im Wesentlichen in eine zur Mittelachse parallelen Richtung orientiert sind. Diese Aussparungen und/oder Vorsprung können beispielsweise in Form von Zähnen, in Form von Zacken, in Form von Halbkreisen, in Form von Ellipsen oder aber in Kombinationen hieraus oder ähnlichen Gestaltungen wie auch jeder anderen beliebigen Form vorgesehen sein. Weiterhin kann vorgesehen sein, dass der Stator wenigstens eine Aussparung und/oder wenigstens einen Vorsprung lediglich auf einer Stirnseite, auf einer anderen Stirnseite oder aber auf beiden Stirnseiten aufweist. Die Anordnung der Aussparung und/oder des Vorsprungs kann hierbei entsprechend einer vorgesehenen Anordnung der Statoren erfolgen. Beispielsweise kann bei einer vorgesehenen Anordnung einer vorderseitigen Stirnseite eines ersten Stators mit einer rückseitigen Stirnkante eines anderen Stators eine entsprechend korrespondierende Anordnung von Vorsprüngen und/oder Aussparungen an der vorderseitigen Stirnseite des einen Stators mit korrespondierenden Aussparungen und/oder Vorsprüngen an der rückseitigen Stirnseite des anderen Stators erfolgen. Desweiteren kann eine Winkelverteilung bzw. eine Beabstandung der Vorsprünge und/oder Aussparungen an einer Stirnseite jeweils eines Stators entsprechend einer gewünschten Möglichkeit zur Einstellung von Phasenverschiebungen erfolgen.

In einer weiteren Ausgestaltung kann der Stator beispielsweise derart ausgestaltet sein, dass wenigstens der erste Statorpol und der zweite Statorpol über wenigstens eine Strebe miteinander verbunden sind. Hierbei ist die Strebe die Mittelachse des Stators wenigstens teilweise umlaufend angeordnet. Die Strebe weist hierbei wenigstens abschnittsweise in eine zur Mittelachse im Wesentlichen parallelen Richtung eine Verjüngung auf. In einer weiteren Ausbildung des Stators kann vorgesehen sein, dass die Strebe zur Mittelachse im Wesentlichen koaxial und teilweise umlaufend um diese angeordnet ist und/oder dass die Strebe wenigstens abschnittsweise über eine gegenüber angrenzenden Bereichen der Strebe verringerte Dichte aufweist.

Ein Vorteil einer wenigstens abschnittsweisen Verjüngung der Strebe in eine zur Mittelachse im Wesentlichen parallelen Richtung ist, dass ein magnetischer Fehlfluss weitgehend verhindert wird beziehungsweise nahezu auf Null reduziert werden kann. Dies wird dadurch bewirkt, dass durch die reduzierte Höhe in dem Bereich der Verjüngung eine magnetische Sättigung des ferromagnetischen Materials schneller erreicht werden kann als in den an die Verjüngung angrenzenden Bereiche des Stators. Durch die magnetische Sättigung entsteht hierdurch im Bereich der Verjüngung eine ferromagnetische Isolierung, welche den magnetischen Fluss zweier jeweils benachbarter Statorpole voneinander trennt.

Ein vergleichbarer Vorteil wird durch eine wenigstens abschnittsweise verringerte Dichte einer Strebe gegenüber angrenzenden Bereichen dieser Strebe erreicht. Eine verringerte Dichte entspricht hierbei hinsichtlich des physikalisch erreichten Defekts in analoger Weise der oben beschriebenen Verjüngung der Strebe. Eine Kombination einer solchen Verjüngung der Strebe sowie einer Verringerung der Dichte führt darüber hinaus zu einer weiteren Verstärkung des beschriebenen Effekts.

Desweiteren kann in einer Ausgestaltung des Stators vorgesehen sein, dass eine Winkelverteilung der Statorpole, eine Ausgestaltung der Statorpole und/oder eine Verteilung der Dichte der Statorpole entsprechend einem gewünschten Drehmomentverlauf während des Verlaufs einer Umdrehung des Rotors eingestellt ist.

In einer weiteren Ausgestaltung des Stators ist beispielsweise vorgesehen, dass der Stator neun Statorpole aufweist. In einer Ausbildung des Stators ist beispielsweise vorgesehen, dass zwei benachbarte Statorpole um einen Winkel von (120/9)° verdreht sind, wobei eine Verdrehung um diesen Winkel dahingehend zu verstehen ist, dass bei identischer Form dieser benachbarten Statorpole deren Deckung durch eine Rotation um einen Winkel von (120/9)° um die Mittelachse des Stators erreicht werden könnte. In einer anderen Ausgestaltung kann vorgesehen sein, dass zwei benachbarte Statorpole um einen Winkel von (120/6)° verdreht sind. Desweiteren kann in einer weiteren Ausbildung vorgesehen sein, dass der Stator sechs Statorpole aufweist.

In einer weiteren Ausgestaltung kann vorgesehen sein, dass der Stator pulvermetallurgisch aus einem weichmagnetischen Material hergestellt ist. In einer Ausgestaltung des Stators kann vorgesehen sein, dass der Stator pulvermetallurgisch, also wenigstens auch unter Verwendung eines Verfahrens der Pulvermetallurgie, hergestellt ist.

Der Begriff eines weichmagnetischen Materials kennzeichnet hierbei Werkstoffe mit geringen Koerzitivfeldstärken. Hierbei kann vorgesehen sein, dass als weichmagnetische Materialien Materialien mit einer Koerzitivfeldfeldstärke von weniger als 5000 A/m angesehen werden. Insbesondere kann hierbei vorgesehen sein, dass als weichmagnetische Materialien Materialien mit einer Koerzitivfeldfeldstärke von weniger als 1000 A/m angesehen werden. Die angegebenen Koerzitivfeldstärken beziehen sich hierbei jeweils auf den als weichmagnetisch gewünschten Bereich, also gegebenenfalls etwa lediglich auf die Statorpole oder Bereiche der Statorpole. Desweiteren beziehen sich die angegebenen Koerzitivfeldstärken auf die Eigenschaften des fertiggestellten Bauteils.

Insbesondere kann vorgesehen sein, dass der Stator pulvermetallurgisch aus einem weichmagnetischen Material hergestellt ist, welches wenigstens in dem fertiggestellten Zustand des Stators eine Koerzitivfeldstärke von weniger als 1000 A/m aufweist.

Ein Vorteil der Herstellung mittels eines pulvermetallurgischen Verfahrens ist es, dass enge Toleranzen, insbesondere in der Maßhaltigkeit, erreicht werden, die für das Erreichen der Eigenschaften des Stators vonnöten ist.

Insbesondere kann hierbei beispielweise möglich sein, dass der Stator aus einem SMC-Werkstoff hergestellt ist. Weiterhin kann beispielsweise vorgesehen sein, dass der Stator einstückig hergestellt ist.

Ein Vorteil des Einsatzes eines SMC-Werkstoffs zur Herstellung des Stators ist, dass der Eisenanteil des Stators reduziert werden kann. Desweiteren kann durch die bereits beschriebene Herstellung des Stators mit hohen Toleranzen bezüglich der Abmessungen sowie die bereits beschriebene Herstellung der Wicklung mit hohen Toleranzen bezüglich der Abmessungen und der daraus folgenden Möglichkeit zur räumlichen Trennung der Phasen voneinander auf weiteres, für den Stator zu dessen Isolierung gegenüber der Wicklung zu nutzende Material verzichtet werden. Als ein weiterer Vorteil einer Nutzung eines SMC-Werkstoffs zur Herstellung des Stators ist die Möglichkeit zur leichten Recyclebarkeit durch die gute Eignung der Materialien aus nicht gesintertem SMC-Werkstoff zur Trennung der einzelnen Bestandteile.

In einer weiteren Ausbildung des Verfahrens kann vorgesehen sein, dass wenigstens bereichsweise innerhalb eines zwischen zwei benachbarten Statorpolen befindlichen Raums ein austenitisches Material angeordnet ist. Hierbei kann beispielsweise vorgesehen sein, dass innerhalb eines zwischen zwei benachbarten Statorpolen befindlichen Raums ein austenitischer CrNi-Stahl angeordnet ist. Desweiteren kann beispielsweise vorgesehen sein, dass zwischen zwei benachbarten Statorpolen ein Werkstoff mit einer verringerten Permeabilität im Vergleich zu derjenigen der Statorpole vorgesehen ist. Insbesondere kann vorgesehen sein, dass zwischen zwei benachbarten Statorpolen Bereiche mit einem Werkstoff vorgesehen sind, wobei die Permeabilität innerhalb des Bereichs oder über das Volumen des Bereichs gemittelt mit einer Permeabilität von 50 % oder weniger der Permeabilität der Statorpole angeordnet ist.

Ein weiterer Gedanke der Erfindung betrifft eine elektrische Maschine nach Anspruch 11, umfassend wenigstens ein Statorpaar aus einem ersten Stator und einem zweiten Stator. Weiterhin umfasst die elektrische Maschine wenigstens einen in einem durch den ersten Stator und den zweiten Stator gebildeten Hohlraum befindlichen ersten Rotor und wenigstens eine zumindest in einem Bereich einer Höhe des Rotors den Rotor umlaufende metallische Wicklung. Hierbei sind der erste Stator und der zweite Stator relativ zueinander durch wenigstens einen stirnseitig in einem Statorpolträger des ersten Stators befindlichen Vorsprung und/oder Aussparung in Zusammenwirkung mit korrespondierenden stirnseitig in einem Statorpolträger des zweiten Stators befindlichen Vorsprüngen und/oder Aussparungen zueinander winkelpositioniert.

In einer weiteren Ausbildung der elektrischen Maschine kann vorgesehen sein, dass zwischen der Wicklung und dem ersten Stator und/oder der Wicklung und dem zweiten Stator ein Positionierungselement angeordnet ist zur definierten Beanstandung der Wicklung zum ersten Stator und/oder zum zweiten Stator. Desweiteren kann vorgesehen sein, dass zwischen der Wicklung und dem ersten Stator und/oder der Wicklung und dem zweiten Stator ein Positionierungselement angeordnet ist zur definierten Einstellung eines Mindestabstands zwischem dem ersten Stator und der Wicklung und/oder dem zweiten Stator und der Wicklung.

Desweiteren kann vorgesehen sein, dass der Begriff der den Rotor umlaufenden metallischen Wicklung dahingehend zu verstehen ist, dass eine Wicklung entlang der gleichen Umlauforientierung wie der vorgesehenen Drehrichtung des Rotors vorgesehen ist. Es kann weiterhin vorgesehen sein, dass der Begriff der den Rotor umlaufenden metallischen Wicklung dahingehend zu verstehen ist, dass eine Wicklung entlang einer Umlauforientierung vorgesehen ist, welcher der vorgesehenen Drehrichtung des Rotors entgegengesetzt ist.

In einer weiteren Ausgestaltung der elektrischen Maschine ist vorgesehen, dass eine Anzahl von wenigstens zwei Statorpaaren hintereinander angeordnet ist und dass das erste Statorpaar und das zweite Statorpaar relativ zueinander durch wenigstens einen stirnseitig in einem Statorpolträger des ersten Statorpaars befindlichen als Außenvorsprung ausgebildeten Vorsprung und/oder als Außenaussparung ausgebildete Aussparung in Zusammenwirkung mit korrespondierenden stirnseitig in einem Statorpolträger des zweiten Statorpaars befindlichen als Außenvorsprüngen ausgebildeten Vorsprüngen und/oder als Außenaussparungen ausgebildeten Aussparungen zueinander winkelpositioniert sind, wobei die Winkelpositionierung zwischen dem ersten Statorpaar und dem zweiten Statorpaar entsprechend einer gewünschten Phasenverschiebung gewählt ist.

Ein Vorteil einer Anordnung von wenigstens zwei Statorpolen hintereinander mittels stirnseitig angebrachten, als Außenvorsprüngen ausgebildeten Vorsprüngen und/oder als Außenaussparungen ausgebildeten Aussparungen in Zusammenwirkung mit korrespondierenden stirnseitigen als Außenvorsprüngen ausgebildeten Vorsprüngen und/oder als Außenaussparungen ausgebildeten Aussparungen in einem zweiten Statorpaar ist, dass eine gewünschte Phasenverschiebung derart exakt eingestellt werden kann, dass eine elektronische Phasenverschiebung nicht mehr notwendig ist.

Ein weiterer Vorteil der Verwendung von Statorpaaren mit stirnseitig in einem Statorpolträger eines ersten Stators befindlichem, als Außenvorsprung ausgebildeten Vorsprung und/oder als Außenaussparung ausgebildeter Aussparung in Zusammenwirkung mit korrespondierenden stirnseitig in einem Statorpolträger des zweiten Stators befindlichen, als Außenvorsprüngen ausgebildeten Vorsprüngen und/oder als Außenaussparungen ausgebildeten Aussparungen ist, dass eine Winkelpositionierung nach einer Hintereinanderanordnung von Statorpaaren nicht mehr notwendig ist und hierdurch ein wesentlich vereinfachter Zusammenbau der elektrische Maschine erreicht werden kann.

In einer weiteren Ausbildung der elektrischen Maschine kann vorgesehen sein, dass die wenigstens zwei Statorpaare wenigstens zwei gleiche Statorpaare aufweisen.

In einer Ausgestaltung der elektrischen Maschine mit wenigstens zwei gleichen Statorpaaren, wobei diese zwei gleiche Statorpaare jeweils zwei gleiche Statoren umfassen, kann vorgesehen sein, dass das erste und das zweite Statorpaar gegeneinander um den gleichen Winkel verdreht sind wie zwei nebeneinander angeordnete Statorpole jedes dieser Statoren der wenigstens zwei gleichen Statorpaare.

In einer weiteren Ausgestaltung der elektrischen Maschine kann vorgesehen sein, dass die Wicklung als Ringwicklung ausgeführt und weitgehend frei von Isoliermaterial ist und/oder dass die Wicklung nahezu keine Wickelköpfe aufweist. In einer weiteren Ausbildung der elektrischen Maschine kann beispielsweise vorgesehen sein, dass die Wicklung vollständig frei von Isoliermaterial ist. In einer weiteren Ausbildung der elektrischen Maschine ist vorgesehen, dass die Wicklung keine Wickelköpfe aufweist.

Ein Vorteil einer Ausgestaltung der elektrischen Maschine mit einer Wicklung, welche weitgehend frei von Isoliermaterial ist und/oder nahezu kein Wickelköpfe aufweist, ist, dass die Leistungsdichte der elektrischen Maschine erhöht ist. Ein Vorteil einer Ausbildung der elektrischen Maschine dahingehend, dass die Wicklung keinen Wickelkopf aufweist, ist, dass die Leistungsdichte der elektrischen Maschine optimiert ist. Desweiteren wird durch einen möglichen Verzicht auf die in der Regel wenigstens nahezu, in den meisten Fällen vollständig, funktionslosen Wickelköpfen die Menge von für diese einzusetzendem Material reduziert. So wird in vielen Fällen beispielsweise Kupfer oder Kupfer als wesentlichen Bestandteil aufweisende Legierungen als Material für die Wicklungen genutzt, so dass durch die Möglichkeit der Vermeidung von Wickelköpfen der Kupferbedarf deutlich verringert werden kann.

Ein Vorteil einer geometrischen Vereinfachung der Wicklung als Ringwicklung ist, dass die Fertigung der Wicklung deutlich vereinfacht ist. Insbesondere durch potentiell deutlich größere Zugkräfte während der Hersteillug der Wicklung ist es möglich, den Füllgrad der Wicklung als ganzes deutlich zu erhöhen. So ist es beispielsweise möglich, einen Füllgrad von ungefähr bis zu 90 % zu erreichen, so dass ungefähr bis zu 90 % des Volumens der Wicklung tatsächlich aus dem für die Wicklung verwendeten Werkstoff bestehen und nur ein entsprechend geringer Anteil des Wicklungsvolumens funktionslos ist. Ein Vorteil des hohen Füllgrades ist beispielsweise, dass eine Baugrößenreduzierung der Wicklung und in der Folge der elektrischen Maschine sowie in unmittelbarer Konsequenz eine beträchtliche Erhöhung der Leistungsdichte und/oder in Ausführung der elektrischen Maschine als Gleichstrommaschine eine Nutzung von Strömen mit beträchtlich höherer Stromstärke ermöglicht ist, als dies bei in üblicher Wickeltechnik mit auftretenden Wickelköpfen der Fall ist.

In einer weiteren Ausbildung der elektrischen Maschine ist vorgesehen, dass der erste Stator und der zweite Stator die gleiche Gestalt aufweisen.

Vorteil einer dahingehenden Ausgestaltung des ersten Stators und des zweiten Stators, dass der erste Stator und der zweite Stator die gleiche Gestalt aufweisen, ist, dass die Anzahl unterschiedlicher herzustellender Bauteile reduziert wird und hierdurch das Fertigungsverfahren für eine Herstellung der Statoren für elektrische Maschinen deutlich vereinfacht werden kann. Desweiteren ist eine deutliche Vereinfachung des Fertigungsprozesses, insbesondere beim Zusammenbau der elektrischen Maschine gegeben.

Ein weiterer Gedanke der Erfindung sieht ein Verfahren nach Anspruch 15 zum Zusammenbauen einer, bevorzugt rohrförmigen, elektrischen Maschine mittels wenigstens einem Zusammenbauen eines Statorpaars vor. Das Verfahren zum Zusammenbauen einer rohrförmigen elektrischen Maschine mittels wenigstens einem Zusammenbauen eines Statorpaars erfolgt hierbei, indem wenigstens die folgenden Schritte erfolgen:
- Positionieren eines Rotors in einen Hohlraum eines ersten Stators,
- Positionieren einer metallischen Wicklung in einen Bereich mit gegenüber angrenzenden Bereichen des ersten Stators verringerter Höhe, wobei die metallische Wicklung den für den Rotor vorgesehenen Bereich wenigstens über einen axialen Bereich, bevorzugt im Wesentlichen koaxial, umläuft,
- Positionieren des ersten Stators wenigstens in einem Formschluss mit dem zweiten Stator, wobei hierbei eine definierte Winkelpositionierung des ersten Stators und des zweiten Stators zueinander erfolgt, indem wenigstens ein stirnseitig in einem Statorpolträger des ersten Stators befindlicher Vorsprung und/oder Aussparung in korrespondierende Position mit jeweils einer stirnseitig in einem Statorpolträger des zweiten Stators befindlichen Aussparung und/oder Vorsprung gebracht werden.

In einer Ausbildung dieses Verfahrens ist vorgesehen, dass wenigstens ein erstes Statorpaar und ein zweites Statorpaar wenigstens in Formschluss hintereinander positioniert werden. Hierbei erfolgt eine definierte Winkelpositionierung des ersten Statorpaars und des zweiten Statorpaars, indem wenigstens ein stirnseitig in einem Statorpolträger des ersten Stators befindlicher als Außenvorsprung ausgebildeter Vorsprung und/oder als Außenaussparung ausgebildete Aussparung in korrespondierende Position mit jeweils einer stirnseitig in einem Statorpolträger des zweiten Stators befindlichen als Außenaussparung ausgebildeten Aussparung und/oder als Außenvorsprung ausgebildeten Vorsprung gebracht werden.

In einer weiteren Ausbildung des Verfahrens kann vorgesehen sein, dass die Wicklung vor dem Positionieren gewickelt ist.

Ein Positionieren einer metallischen Wicklung in einem Bereich mit gegenüber angrenzenden Bereichen des ersten Stators verringerter Höhe, wobei die metallische Wicklung vor dem Positionieren gewickelt ist, bewirkt den Vorteil, dass die Phasenwinkel für die gemäß üblicher, mit einer Längsrichtung entlang einer Axialrichtung einer vorher erfolgten Wicklung keine Rolle mehr spielt. In der Folge sind aufwändige Wickeltechniken, wie beispielsweise Nadelwickeltechnik und/oder Flyerwickeltechnik, nicht mehr erforderlich. Desweiteren ist aufgrund der nunmehr vereinfachten nutzbaren Wickeltechnik ein deutlich höherer Füllgrad des für die Wicklung verwendeten Materials erreichbar. Während mit herkömmlichen Techniken Füllgrade von üblicherweise ungefähr 40 % bis 50 % erreichbar sind, besteht in dem hier beanspruchten Verfahren die Möglichkeit, einen Füllgrad an für die Wicklung verwendetem Material zu erreichen, welcher beträchtlich höher ist und bis zu etwa 90 % betragen kann. Desweiteren ist es aufgrund der nicht mehr notwendigen Wickelköpfe möglich, dass kein Drahtschutz an den äußeren Kanten der Wicklung mehr erforderlich ist.

Desweiteren betrifft ein weiterer Gedanke der Erfindung nach Anspruch18 die Verwendung eines Verfahrens zum Zusammenbauen einer rohrförmigen elektrischen Maschine zur skalierten Konstruktion einer elektrischen Maschine unter Verwendung eines Stators. Bevorzugt wird hierfür eine Ausbildung der elektrischen Maschine und/oder des Stators gemäß den obenstehenden Erläuterungen verwendet. In einer Ausbildung wird die Verwendung zur Konstruktion eines Transversalflussgenerators genutzt. In einer weiteren Ausbildung ist vorgesehen, dass die Verwendung zur Konstruktion eines Transversalflussmotors genutzt wird.

Beispielsweise kann bei Verwendung von gleichen Statorpaaren und/oder gleichen Statoren eine skalierte Konstruktion einer elektrischen Maschine erreicht werden. Bei einer Konstruktion einer elektrischen Maschine durch Hintereinanderanordnung von Statorpaaren in beliebiger Anzahl kann beispielsweise bewirkt werden, dass die Länge der elektrischen Maschine entsprechend der gewünschten Leistung beliebig gewählt wird, wohingegen die radialen Auslegungen beziehungsweise bei Verwendung von kreiszylindrischen Statoren der Durchmesser der elektrischen Maschine unverändert bleibt.

Weitere vorteilhafte Ausgestaltungen und Weiterbildungen gehen aus den nachfolgenden Figuren hervor. Die aus den einzelnen Figuren hervorgehenden Einzelheiten und Merkmale sind jedoch nicht auf die jeweilige Figur beschränkt. Vielmehr können ein oder mehrere Merkmale mit einem oder mehreren Merkmalen aus verschiedenen Figuren, wie auch mit aus der obigen Beschreibung hervorgehenden Merkmalen zu neuen Ausgestaltungen verknüpft werden. Insbesondere dienen die nachfolgenden Ausführungen nicht als Beschränkung des jeweiligen Schutzbereichs, sondern erläutern Einzelmerkmale sowie ihr mögliches Zusammenwirken untereinander.

Es zeigen:
- Fig. 1: Ansicht einer Ausgestaltung eines Stators in einem Schnitt entlang einer eine Mittelachse des Stators enthaltenen Ebene,
- Fig. 2: Abschnitt eines Bereichs des in Fig. 1 gezeigten Stators in einem Schnitt,
- Fig. 3: Schrägaufsicht einer Ausgestaltung des Stators mit gegenüber einer jede Mittelachse des Stators enthaltenden Ebene gekrümmten Statorpolen,
- Fig. 4: Detailansicht des in Fig. 3 gezeigten Stators,
- Fig. 5: Explosionsdarstellung einer elektrischen Maschine aus einem Statorpaar, einem Rotor sowie einer Wicklung,
- Fig. 6a-c: Darstellung verschiedener elektrischer Maschinen in der Ausgestaltung jeweils einer rohrförmigen elektrischen Maschine:
a) eine rohrförmige elektrische Maschine umfassend drei Statorpaare,
b) eine rohrförmige elektrische Maschine umfassend sechs Statorpaare,
c) eine rohrförmige elektrische Maschine umfassend neun Statorpaare,
- Fig. 7a-b: ein erster Stator und ein zweiter Stator.

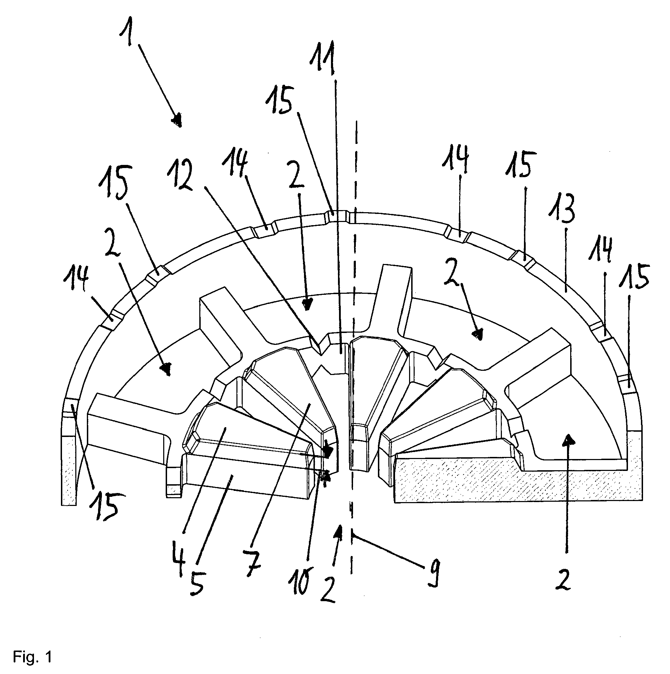

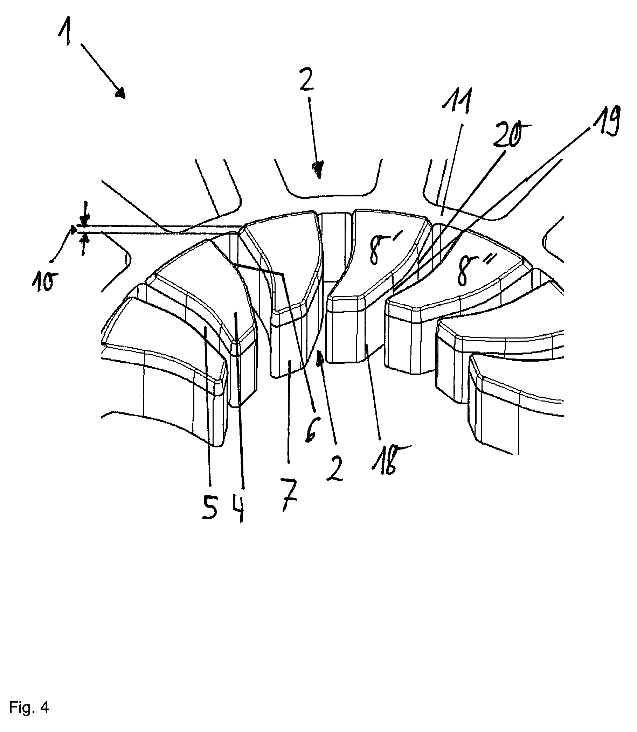

In Fig. 1 ist eine Ansicht eines Stators 1 in einem Schnitt entlang einer Ebene gezeigt, welche die Mittelachse 9 des Stators 1 enthält. In der gezeigten Ausgestaltung ist der Stator 1 als mit Durchbrüchen 2 versehener scheibenähnlicher Körper ausgebildet. Der Stator 1 verfügt über einen als Statorpolträger 3 ausgebildeten Bereich, welcher in dem gezeigten Ausführungsbeispiel gleichzeitig auch einen Außenumfang des Mantels des Stators 1 umfasst. In der gezeigten Ausgestaltung umschreibt der Außenumfang des Mantels des Stators 1 im Wesentlichen eine Kreisfläche, so dass die Mittelachse 9 des Stators 1 durch den Mittelpunkt dieses Kreises verläuft und mit der Rotationsache des in Fig. 4 gezeigten Rotors 16 der elektrischen Maschine zusammenfällt. Ausgehend von einer Innenfläche des Statorpolträgers 3 sind an dem Statorpolträger 3 ein erster Statorpol 4 mit einer ersten Flanke 5 und einer, in der gezeigten Abbildung nicht sichtbaren, zweiten Flanke 6 sowie ein zweiter Statorpol 7 gemeinsam mit weiteren Statorpolen 8', 8" angeordnet. Alle Statorpole sind in der gezeigten Ausgestaltung des Stators 1 in regelmäßiger Anordnung angeordnet, indem die Winkel zwischen den die Mittelachse 9 des Stators umfassenden Symmetrieebenenen benachbarter Statorpole jeweils gleich sind. Die Statorpole sind in Richtung der Mittelachse 9 weisend gerichtet orientiert. Der gezeigten Ausbildung ist zu entnehmen, dass sowohl die erste Flanke 5 als auch die zweite Flanke 6 des ersten Statorpols 4 in einem Höhenbereich 10 abgeschrägt sind, wobei die Abschrägung von der, bei Betrachtung in der gezeigten Orientierung, oberen Stirnseite nach außen verlaufen. Die Abschrägungen sind in der gezeigten Ausgestaltung als schräge Ebenen ausgeführt, welche zu den nicht abgeschrägten Ebenen der jeweiligen Flanke mit einem diskreten Übergang übergehen. In der gezeigten Ausgestaltung sind die Statorpole gleich ausgebildet und unterscheiden sich nur in ihrer Orientierung. Der erste Statorpol, der zweite Statorpol wie auch die übrigen Statorpole sind jeweils ebenensymmetrisch zu genau einer die Mittelachse des Stators enthaltenden Ebene, weisen also keine Krümmung auf. In der gezeigten Ausgestaltung weisen die Statorpole somit keinen von einer ebenensymmetrischen Ausgestaltung abweichenden Verlauf auf. Wie Fig. 1 weiterhin zu entnehmen ist, ist in der gezeigten Ausgestaltung des Stators zwischen jeweils zwei Statorpolen jeweils eine Strebe 11 angeordnet, welche die Mittelachse 9 in koaxialem Umlauf teilweise umläuft. Die gezeigte Streben 11 weisen jeweils eine Verjüngung 12 auf. An der oberen Stirnseite 13 des Statorpolträgers sind zum einen Aussparungen 14 sowie zum anderen Vorsprünge 15 angeordnet, wobei einem die Mittelachse 9 umlaufenden Verlauf folgend Aussparungen 14 und Vorsprünge 15 jeweils abwechselnd angeordnet sind. Gleichartig ausgebildete Aussparungen 14 und Vorsprünge 15 sind auf der gegenüberliegenden Stirnseite ebenfalls angeordnet; diese sind der gezeigten Ansicht jedoch nicht zu entnehmen.

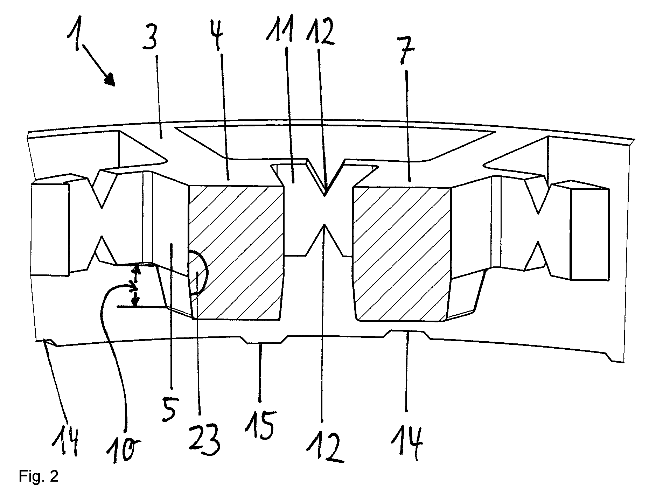

Der Fig. 2 ist ein Abschnitt eines Bereichs des in Fig. 1 gezeigten Stators gezeigt in einem Schnitt gezeigt. Der Schnitt verläuft hierbei mit einer zur Symmetrieebene des mittleren der drei gezeigten Statorpole senkrechten Ebene. Neben einer detaillierteren Ansicht der erkennbaren und bereits in Fig. 1 gezeigten Merkmale ist der Fig. 2 noch der Ergänzungswinkel 23 zum Abschrägewinkel in entsprechend perspektivischer Ansicht zu entnehmen. Der Abschrägewinkel beträgt in der hier gezeigten Ausgestaltung des stators bei allen Statorpolen und jeweils an beiden Flanken der Statorpole 0,9°, so dass der Ergänzungswinkel 23 entsprechend 179,1 ° groß ist.

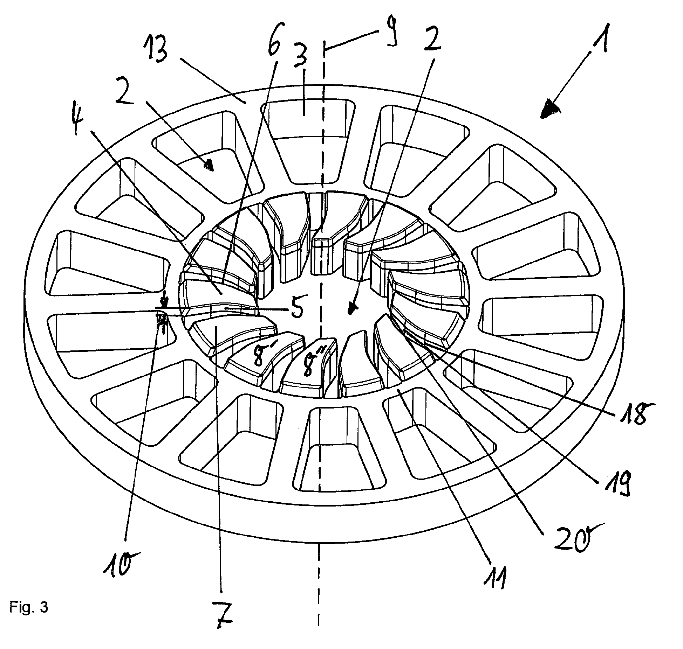

Die in Fig. 3 gezeigte Ausbildung eines Stators 1 unterscheidet sich von der in Fig. 1 gezeigten Ausbildung eines Stators 1 unter anderem dahingehend, dass der erste Statorpol 4, der zweite Statorpol 7 wie auch alle anderen Statorpole gekrümmt sind. In der Folge sind die Statorpole gegenüber jeder die Mittelachse 9 enthaltenden Achse asymmetrisch. Hierbei krümmt der Statorpol sich mit zunehmendem Abstand eines jeweiligen Statorpols von dem Statorpolträger 3 von dieser Ebene im Wesentlichen wegbiegend. Die Krümmung der Statorpole ist hierbei in der gezeigten Ausbildung nicht in kontinuierlicher Entwicklung, sondern an einer ersten Krümmungslinie 18, einer zweiten Krümmungslinie 19 sowie einer dritten Krümmungslinie 20 diskret ausgeführt. Als ein weiterer Unterschied zu der in Fig. 1 gezeigten Ausbildung weist der Stator in der in Fig. 3 gezeigten Ausbildung keine Verjüngung 12 der Strebe 11 auf.

In Fig. 4 ist ein Ausschnitt aus Fig. 3 zur Verdeutlichung in vergrößerter Form gezeigt.

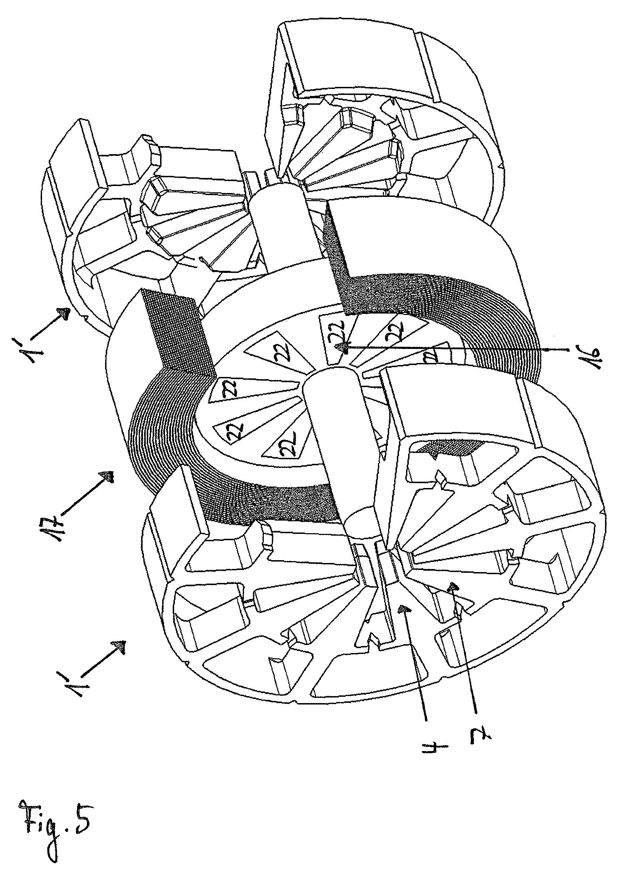

Der Fig. 5 ist eine elektrische Maschine 21 aus einem Statorpaar aus einem ersten Stator 1' und einem zweiten Stator 1", einem Rotor 16 sowie einer Wicklung 17 in Explosionsdarstellung zu entnehmen. Durch den ersten Stator 1' und den zweiten Stator 1" wird ein Hohlraum gebildet, welcher zum einen der Aufnahme des Rotors 16 und zum anderen einer Aufnahme der Wicklung 17 dient. Der erste Stator 1' und der zweite Stator 1" sind hierbei ähnlich dem in Fig. 1 gezeigten Stator konstruiert. In dem Bereich zwischen den Streben 11 und dem Statorpolträger 3 ist entlang einer zur Axialrichtung parallelen Richtung die Höhe gegenüber den benachbarten Bereichen, welche hier als Streben 11 und als Statorpolträger 3 ausgebildet sind, die Mittelachse 9 vollständig umlaufend verringert. Die verringerte Höhe ist in dem gezeigten Ausbildungsbeispiel hierbei als die Mittelachse 9 des Stators 1 vollständig umlaufende Nut ausgebildet. Der hierdurch entstehende Hohlraum dient der Aufnahme der Wicklung 17, deren Erstreckung in einer zur Axialrichtung parallelen Richtung diejenige Erstreckung des Rotors 16 überragt. Als weiteres ist der Fig. 5 zu entnehmen, dass der erste Statorpol 4, der zweite Statorpol 7, sowie die übrigen, nicht mit Bezugszeichen versehenen Statorpole in Bereichen ihrer Ausdehnung in einem stirnseitigen Schnitt mit den hartmagnetischen Bereichen 22 korrespondieren. Die Korrespondenz ist hierbei dahingehend ausgebildet, dass die Flächen in dem stirnseitigen Schnitt bereichsweise deckungsgleich sind. Diese Deckungsgleichheit der Flächen der Statorpole im stirnseitigen Schnitt mit den Flächen der hartmagnetischen Bereiche in Kombination mit der Abschrägung der ersten Flanke 5 und der zweiten Flanke 6 des ersten Statorpols 4 und in analoger Weise der Flanken der übrigen Statorpole führte im Betrieb der elektrischen Maschine zu einer Generierung eines nahezu perfekt sinusförmigen Spannungsverlaufs.

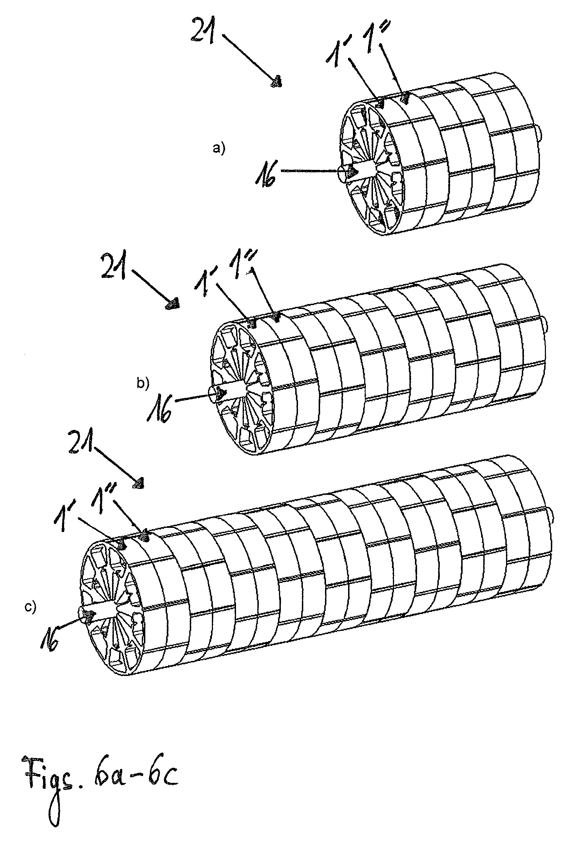

In Fig. 6 sind verschiedene elektrische Maschinen 21 aus einer Anzahl von Statorpaaren in einem zusammengebauten Zustand gezeigt. In Fig. 6a) ist eine elektrische Maschine 21 aus drei Statorpaaren gezeigt mit einem ersten Statorpaar aus einem ersten Stator 1' und einem zweiten Stator 1" und entsprechend zwei weiteren Statoren. Die Statorpaare sind hierbei entsprechend einer gewünschten Phasenverschiebung gegeneinander verdreht. In Fig. 6b ist eine elektrische Maschine 21 aus sechs Statorpaaren gezeigt, wobei die gezeigte Ausbildung der elektrischen Maschine 21 durch Hintereinanderanordnung der in Fig. 6a) gezeigten Ausbildung der elektrischen Maschine ausgebildet ist. In analoger Weise ist in Fig. 6c) eine Ausbildung einer elektrischen Maschine 21 aus drei hintereinander angeordneten Statorpaaren, wie sie in Fig. 6a) gezeigt sind, abgebildet. Die drei in Fig. 6 gezeigten Beispiele demonstrieren somit, wie aus einer Hintereinanderanordnung von Statorpaaren eine skalierte Konstruktion einer elektrischen Maschine 21 ermöglicht ist.

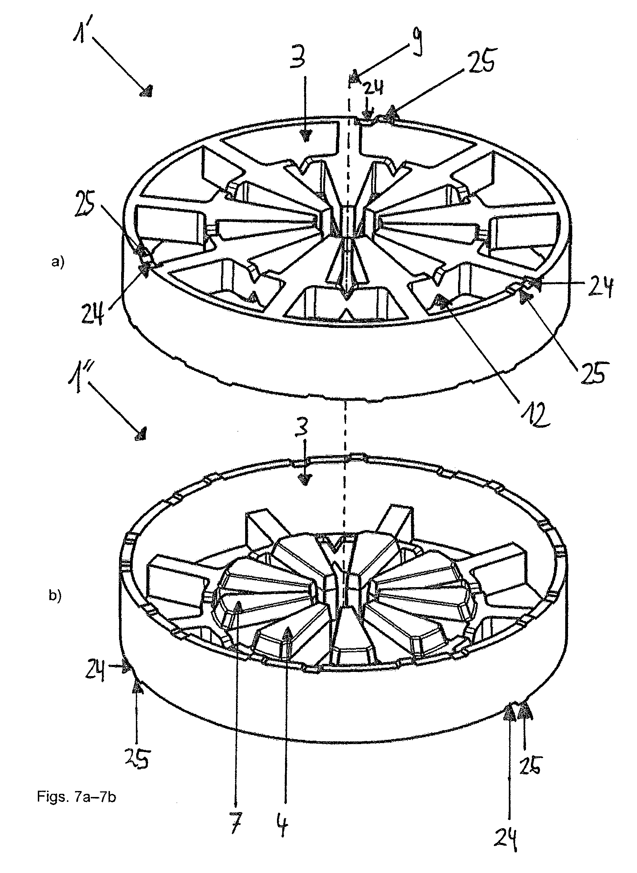

In Fig. 7a und Fig. 7b sind zwei Statoren, ein erster Stator 1' und ein zweiter Stator 1" gezeigt, welche dem in Fig. 1 gezeigten Stator ähnlich sind. Die Bezugszeichen entsprechen somit den unter Fig. 1 gezeigten Erläuterungen. Der in Fig. 7a und der in Fig. 7b gezeigte Stator sind in ihrer Form identisch. Auf ihren beiden einander abgewandten Seiten weisen beide Statoren jeweils drei Paare von Aussparungen und Vorsprüngen auf, die als Außenaussparung 24 und Außenvorsprung ausgebildet sind. Nach einem Fügen des in Fig. 7a gezeigten ersten Stators 1' mit dem in Fig. 7b gezeigten zweiten Stator 1" kann das dann entstandene Paar mit den Paaren von Außenaussparung 24 und Außenvorsprung 25 jeweils in zumindest auch formschlüssiger Verbindung mit identischen Statorpaaren gefügt werden. Aufgrund der im Winkel von (360/3)° zueinander drehorientierten Anordnung von Paaren von Außenaussparung 24 und Außenvorsprung 25 sowie der in diesem Beispiel gezeigten Ausgestaltung der Statoren als Statoren mit jeweil 9 Statorpolen, welche mit (360/9)° zueinander drehorientierter Ausrichtung angeordnet sind, führt in dem gezeigten Beispiel eine beliebige mögliche Anordnung von Statoren in jedem Fall zu einer gewünschten Winkelorientierung der Statoren eines Statorpaars einerseits sowie mehrerer Statorpaare zueinander andererseits.

### Bezugszeichenliste

- 1: Stator
- 1': erster Stator
- 1": zweiter Stator
- 2: Durchbruch
- 3: Statorpolträger
- 4: erster Statorpol
- 5: erste Flanke
- 6: zweite Flanke
- 7: zweiter Statorpol
- 8', 8": weitere Statorpole
- 9: Mittelachse
- 10: Höhenbereich
- 11: Strebe
- 12: Verjüngung
- 13: obere Stirnseite
- 14: Aussparung
- 15: Vorsprung
- 16: Rotor
- 17: Wicklung
- 18: erste Krümmungslinie
- 19: zweite Krümmungslinie
- 20: dritte Krümmungslinie
- 21: elektrische Maschine
- 22: hartmagnetischer Bereich
- 23: Ergänzungswinkel zum Abschrägewinkel
- 24: als Außenaussparung ausgebildete Aussparung
- 25: als Außenvorsprung ausgebildeter Vorsprung

## Patentansprüche

1. Stator (1, 1', 1") für eine, bevorzugt reversibel, zusammensetzbare elektrische Maschine (21) mit wenigstens einem Rotor (16), wobei der Stator (1, 1', 1")
- als mit wenigstens einem Durchbruch (2) versehener Körper ausgebildet ist, der wenigstens einen ferromagnetischen Werkstoff aufweist, und
- weiterhin aufweist:
- wenigstens einen als Statorpolträger (3) ausgebildeten Bereich, welcher wenigstens teilweise eine Mittelachse (9) des Stators (1, 1', 1") umringt,
- wenigstens einen ersten Statorpol (4) mit wenigstens einer ersten Flanke (5) und einer zweiten Flanke (6), sowie
- wenigstens einen zweiten Statorpol (7),
- wobei die Statorpole, bevorzugt im Wesentlichen entlang einer Radialrichtung weisend gerichtet, unmittelbar oder mittelbar an dem Statorpolträger (3) angeordnet sind
**dadurch gekennzeichnet, dass**
- die Dichte des Materials des Stators (1, 1', 1") ortsabhängig eingestellt ist, und zwar zur Bereitstellung eines ortsabhängig eingestellten magnetischen Widerstands und
- dass der Stator (1, 1', 1") ein gleiches Material aufweist,
- wobei durch eine ortsabhängig veränderte Dichte des gleichen Materials des Stators (1, 1', 1") unmittelbar der magnetische Widerstand eingestellt ist.

2. Stator (1, 1', 1") nach Anspruch 1, **dadurch gekennzeichnet, dass** der erste Statorpol (4) zu jeder die Mittelachse (9) des Stators (1, 1', 1") enthaltenden Ebene asymmetrisch ist und sich mit zunehmendem Abstand von dem Statorpolträger (3) sich von dieser Ebene im Wesentlichen fortbiegend gekrümmt ist.

3. Stator (1, 1', 1") nach Anspruch 1 oder 2, **dadurch gekennzeichnet, dass** die erste Flanke (5) und/oder die zweite Flanke (6) über wenigstens einen Höhenbereich (10) des ersten Statorpols (4) gegenüber der Mittelachse (9) des Stators (1, 1', 1") abgeschrägt ist, wobei die Abschrägung in diskretem oder kontinuierlichem Verlauf oder einer Kombination aus beidem ausgebildet ist.

4. Stator (1, 1', 1") nach einem der vorhergehenden Ansprüche, **dadurch gekennzeichnet, dass** der erste Statorpol (4) mit wenigstens einer stirnseitigen Schnittfläche mit wenigstens einer stirnseitigen Schnittfläche eines hartmagnetischen Bereichs des Rotors (16) korrespondiert.

5. Stator (1, 1', 1") nach einem der vorhergehenden Ansprüche, **dadurch gekennzeichnet, dass** ein die Mittelachse (9) wenigstens teilweise umringender Bereich des Stators (1, 1', 1 ") eine gegenüber wenigstens einem an diesen Bereich angrenzenden Nachbarbereich verringerte Höhe zur zumindest teilweisen Aufnahme von wenigstens einer Wicklung (17) aufweist.

6. Stator (1, 1', 1") nach einem der vorhergehenden Ansprüche, **dadurch gekennzeichnet, dass** der Statorpolträger (3) des Stators (1, 1', 1") wenigstens bereichsweise wenigstens eine, bevorzugt im Wesentlichen in eine zur Mittelachse (9) parallelen Richtung orientierte, Aussparung (14) und/oder wenigstens einen, bevorzugt in eine im Wesentlichen zur Mittelachse (9) parallelen Richtung orientierten, Vorsprung (15) aufweist.

7. Stator (1, 1', 1") nach einem der vorhergehenden Ansprüche, **dadurch gekennzeichnet, dass** wenigstens der erste Statorpol (4) und der zweite Statorpol (7) über wenigstens eine Strebe (11) miteinander verbunden sind und dass die Strebe (11) die Mittelachse (9) des Stators (1, 1', 1"), bevorzugt im Wesentlichen koaxial zur Mittelachse (9), wenigstens teilweise umlaufend angeordnet ist, wobei die Strebe (11) wenigstens abschnittsweise in eine zur Mittelachse (9) im Wesentlichen parallelen Richtung eine Verjüngung (12) aufweist und/oder wobei die Strebe (11) wenigstens abschnittsweise über eine gegenüber angrenzenden Bereichen der Strebe (11) verringerte Dichte aufweist.

8. Stator (1, 1', 1") nach einem der vorhergehenden Ansprüche, **dadurch gekennzeichnet, dass** eine Winkelverteilung der Statorpole (4, 7), eine Ausgestaltung der Statorpole (4, 7) und/oder eine Verteilung der Dichte der Statorpole (4, 7) entsprechend einem gewünschten Drehmomentverlauf während des Verlaufs einer Umdrehung des Rotors (16) eingestellt ist.

9. Stator (1, 1', 1") nach einem der vorhergehenden Ansprüche, **dadurch gekennzeichnet, dass** der Stator (1, 1', 1") pulvermetallurgisch aus einem weichmagnetischen Material, bevorzugt aus einem SMC-Werkstoff, bevorzugt einstückig, hergestellt ist.

10. Stator (1, 1', 1") nach einem der vorhergehenden Ansprüche, **dadurch gekennzeichnet, dass** wenigstens bereichsweise innerhalb eines zwischen zwei benachbarten Statorpolen (4, 7) befindlichen Raums ein austenitisches Material, bevorzugt ein austenitischer CrNi-Stahl, angeordnet ist.

11. Elektrische Maschine, umfassend wenigstens ein Statorpaar aus einem ersten Stator (1, 1', 1") und einem zweiten Stator (1, 1', 1") jeweils nach einem der Ansprüche 1 bis 10, wenigstens einen in einem durch den ersten Stator (1, 1', 1") und den zweiten Stator (1, 1', 1") gebildeten Hohlraum befindlichen ersten Rotor (16), wenigstens eine zumindest in einem Bereich einer Höhe des Rotors (16) den Rotor (16) umlaufende metallische Wicklung (17), wobei der erste Stator (1, 1', 1") und der zweite Stator (1, 1', 1") relativ zueinander durch wenigstens einen stirnseitig in dem Statorpolträger (3) des ersten Stators (1, 1', 1") befindlichen Vorsprung (15) und/oder durch wenigstens stirnseitig in dem Statorpolträger (3) des ersten Stators (1, 1', 1") befindliche Aussparung (14) in Zusammenwirkung mit korrespondierenden stirnseitig in dem Statorpolträger (3) des zweiten Stators (1, 1', 1") befindlichen Vorsprüngen (15) und/oder Aussparungen (14) zueinander winkelpositioniert sind.

12. Elektrische Maschine nach Anspruch 11, **dadurch gekennzeichnet, dass** eine Anzahl von wenigstens zwei, bevorzugt zwei gleichen, Statorpaaren hintereinander angeordnet ist, wobei das erste Statorpaar und das zweite Statorpaar relativ zueinander durch wenigstens einen stirnseitig in einem Statorpolträger (3) des ersten Statorpaars befindlichen als Außenvorsprung ausgebildeten Vorsprung und/oder durch wenigstens eine stirnseitig in einem Staturpolträger (3) des ersten Statorpaars befindliche als Außenaussparung ausgebildete Aussparung in Zusammenwirkung mit korrespondierenden stirnseitig in einem Statorpolträger (3) des zweiten Statorpaars befindlichen als Außenvorsprüngen ausgebildeten Vorsprüngen und/oder als Außenaussparungen ausgebildeten Aussparungen zueinander winkelpositioniert sind und wobei die Winkelpositionierung zwischen dem ersten Statorpaar und dem zweiten Statorpaar entsprechend einer gewünschten Phasenverschiebung gewählt ist.

13. Elektrische Maschine nach Anspruch 11 oder Anspruch 12, **dadurch gekennzeichnet, dass** die Wicklung (17) als Ringwicklung ausgeführt und weitgehend, bevorzugt vollständig, frei von Isoliermaterial ist und/oder dass die Wicklung (17) nahezu keine, bevorzugt keine, Wickelköpfe aufweist.

14. Elektrische Maschine nach einem der Ansprüche 11 bis 13, wobei der erste Stator (1 ") und der zweite Stator (1 ") eine gleiche Gestalt aufweisen.

15. Verfahren zum Zusammenbauen einer, bevorzugt rohrförmigen, elektrischen Maschine nach einem der Ansprüche 11 bis 14 mittels Zusammenbauens wenigstens eines Statorpaars, indem wenigstens die folgenden Schritte erfolgen:
- Positionieren eines Rotors (16) in einen Hohlraum eines ersten Stators (1'),
- Positionieren einer metallischen Wicklung (17) in einem Bereich mit gegenüber angrenzenden Bereichen des ersten Stators (1') verringerter Höhe, wobei die metallische Wicklung (17) den für den Rotor (16) vorgesehenen Bereich wenigstens über einen axialen Bereich, bevorzugt im Wesentlichen koaxial, umläuft,
- Positionieren des ersten Stators (1') wenigstens in einem Formschluss mit dem zweiten Stator (1 "), wobei hierbei eine definierte Winkelpositionierung des ersten Stators (1') und des zweiten Stators (1 ") zueinander erfolgt, indem wenigstens ein stirnseitig in dem Statorpolträger (3) des ersten Stators (1') befindlicher Vorsprung (15) und/oder wenigstens eine stirnseitig in dem Statorpolträger (3) des ersten Stators (1') befindliche Aussparung (14) in korrespondierende Position mit jeweils einer stirnseitig in dem Statorpolträger (3) des zweiten Stators (1 ") befindlichen Aussparung (14) und/oder mit jeweils einem stirnseitig in dem Statorpolträger (3) des zweiten Stators (1 ") befindlichen Vorsprung (15) gebracht wird/werden.

16. Verfahren nach Anspruch 15, wobei wenigstens ein erstes Statorpaar und ein zweites Statorpaar wenigstens in Formschluss hintereinander positioniert werden, wobei hierbei eine definierte Winkelpositionierung des ersten Statorpaars und des zweiten Statorpaars erfolgt, indem wenigstens ein stirnseitig in dem Statorpolträger (3) des ersten Stators (1') befindlicher als Außenvorsprung ausgebildeter Vorsprung und/oder wenigstens eine stirnseitig in dem Statorpolträger (3) des ersten Stators (1') befindliche, als Außenaussparung ausgebildete Aussparung in korrespondierende Position mit jeweils einer stirnseitig in dem Statorpolträger (3) des zweiten Stators (1 ") befindlichen als Außenaussparung ausgebildeten Aussparung und/oder mit jeweils einem stirnseitig in dem Statorpolträger (3) des zweiten Stators (1") befindlichen, als Außenvorsprung ausgebildeten Vorsprung gebracht wird/werden.

17. Verfahren nach Anspruch 15 oder nach Anspruch 16, **dadurch gekennzeichnet, dass** die Wicklung (17) vor dem Positionieren gewickelt ist.

18. Verwendung eines Verfahrens nach einem der Ansprüche 15 bis 17 zur skalierten Konstruktion einer elektrischen Maschine, bevorzugt eines Transversalflussgenerators oder eines Transversalflussmotors, nach einem der Ansprüche 11 bis 14, unter Verwendung eines Stators (1, 1', 1") nach einem der Ansprüche 1 bis 10.

## Claims

1. Stator (1, 1', 1") for an electric machine (21) which can be assembled, preferably reversibly, and has at least one rotor (16), wherein the stator (1, 1', 1")
- is embodied as a body which is provided with at least one breakthrough (2) and which has at least one ferromagnetic material, and
- also comprises:
- at least one region which is embodied as a stator pole carrier (3) and at least partially surrounds a central axis (9) of the stator (1, 1', 1"),
- at least a first stator pole (4) with at least a first flank (5) and a second flank (6), and
- at least a second stator pole (7),
- wherein the stator poles are arranged indirectly or directly on the stator pole carrier (3), preferably directed pointing essentially in a radial direction,
**characterized in that**
- the density of the material of the stator (1, 1', 1") is adjusted in a location-dependent fashion, specifically in order to make available a magnetic resistance which is adjusted in a location-dependent fashion, and
- **in that** the stator (1, 1', 1") comprises the same material,
- wherein magnetic resistance is adjusted directly by means of the density of the same material of the stator (1, 1', 1") which is changed in a location-dependent fashion.

2. Stator (1, 1', 1") according to Claim 1, **characterized in that** the first stator pole (4) is asymmetrical with respect to any plane containing the central axis (9) of the stator (1, 1', 1"), and is curved essentially progressively away from this plane as the distance from the stator pole carrier (3) increases.

3. Stator (1, 1', 1") according to Claim 1 or 2, **characterized in that** the first flank (5) and/or the second flank (6) are/is bevelled with respect to the central axis (9) of the stator (1, 1', 1") over at least a height range (10) of the first stator pole (4), wherein the bevel is formed in a discrete or continuous profile or a combination thereof.

4. Stator (1, 1', 1") according to one of the preceding claims, **characterized in that** the first stator pole (4) having at least one end-side sectional face corresponds with at least one end-side sectional face of a hard magnetic region of the rotor (16).

5. Stator (1, 1', 1") according to one of the preceding claims, **characterized in that** a region of the stator (1, 1', 1") which at least partially surrounds the central axis (9) comprises a height which is reduced with respect to at least one neighbouring region adjoining this region and has the purpose of at least partially accommodating at least one winding (17).

6. Stator (1, 1', 1") according to one of the preceding claims, **characterized in that** the stator pole carrier (3) of the stator (1, 1', 1") comprises, at least in regions, at least one recess (14) which is oriented preferably essentially in a direction parallel to the central axis (9), and/or at least one projection (15) which is preferably oriented in a direction which is essentially parallel to the central axis (9).

7. Stator (1, 1', 1") according to one of the preceding claims, **characterized in that** at least the first stator pole (4) and the second stator pole (7) are connected to one another by means of at least one strut (11), and **in that** the strut (11) is arranged so as to at least partially surround the central axis (9) of the stator (1, 1', 1"), preferentially essentially coaxially with respect to the central axis (9), wherein the strut (11) comprises, at least in certain sections, a tapered portion (12) in a direction essentially parallel to the central axis (9) and/or wherein the strut (11) comprises, at least in certain sections, a density which is reduced with respect to adjoining regions of the strut (11).

8. Stator (1, 1', 1") according to one of the preceding claims, **characterized in that** an angular distribution of the stator poles (4, 7), a configuration of the stator poles (4, 7) and/or a distribution of the density of the stator poles (4, 7) are/is adjusted in accordance with a desired torque profile during the course of one revolution of the rotor (16).

9. Stator (1, 1', 1") according to one of the preceding claims, **characterized in that** the stator (1, 1', 1") is manufactured by powder metallurgy from a soft-magnetic material, preferably from an SMC material, preferably in one piece.

10. Stator (1, 1', 1") according to one of the preceding claims, **characterized in that** an austenitic material, preferably an austenitic CrNi steel, is arranged at least in certain areas within a space which is located between two adjacent stator poles (4, 7).

11. Electric machine, comprising at least one stator pair composed of a first stator (1, 1', 1") and a second stator (1, 1', 1"), each according to one of Claims 1 to 10, at least a first rotor (16) located in a cavity formed by the first stator (1, 1', 1") and the second stator (1, 1', 1"), at least one metallic winding (17) which surrounds the rotor (16) at least in a region of a height of the rotor (16), wherein the first stator (1, 1', 1") and the second stator (1, 1', 1") are positioned angularly in relation to one another by means of at least one projection (15), located at the end side in the stator pole carrier (3) of the first stator (1, 1', 1"), and/or by means of at least one recess (14), located at the end side in the stator pole carrier (3) of the first stator (1, 1', 1") in cooperation with corresponding projections (15) and/or recesses (14), located at the end side in the stator pole carrier (3) of the second stator (1, 1', 1").

12. Electric machine according to Claim 11, **characterized in that** a number of at least two, preferably two identical, stator pairs are arranged one behind the other, wherein the first stator pair and the second stator pair are positioned angularly in relation with one another by means of at least one projection, located at the end side in a stator pole carrier (3) of the first stator pair and embodied as an external projection, and/or by means of at least one recess, located at the end side in a stator pole carrier (3) of the first stator pair and embodied as an external recess, in cooperation with corresponding projections, located at the end side in a stator pole carrier (3) of the second stator pair and embodied as external projections, and/or recesses, embodied as external recesses, and wherein the angular positioning between the first stator pair and the second stator pair is selected in accordance with a desired phase shift.

13. Electric machine according to Claim 11 or Claim 12, **characterized in that** the winding (17) is embodied as an annular winding and is largely, preferably completely, free of insulating material, and/or **in that** the winding (17) comprises virtually no, preferably no, winding heads.

14. Electric machine according to one of Claims 11 to 13, wherein the first stator (1") and the second stator (1") are of the same shape.

15. Method for assembling a, preferably tubular, electric machine according to one of Claims 11 to 14 by assembling at least one stator pair, in that at least the following steps are carried out:
- positioning a rotor (16) in a cavity of a first stator (1'),
- positioning a metallic winding (17) in a region with a height which is reduced compared to adjoining regions of the first stator (1'), wherein the metallic winding (17) surrounds the region, provided for the rotor (16), at least over an axial region, preferably essentially coaxially,
- positioning the first stator (1') at least in positively locking engagement with the second stator (1"), wherein an, in this context defined angular positioning of the first stator (1') and of the second stator (1") with respect to on another is carried out in that at least one projection (15) which is located at the end side in the stator pole carrier (3) of the first stator (1') and/or at least one recess (14), located at the end side in the stator pole carrier (3) of the first stator (1'), is/are moved into a corresponding position with, in each case, one recess (14) located at the end side in the stator pole carrier (3) of the second stator (1") and/or with, in each case, one projection (15) located at the end side in the stator pole carrier (3) of the second stator (1").

16. Method according to Claim 15, wherein at least a first stator pair and a second stator pair are positioned at least in positively locking engagement one behind the other, wherein an, in this context defined angular positioning of the first stator pair and of the second stator pair is carried out in that at least one projection, located at the end side in the stator pole carrier (3) of the first stator (1') and embodied as an external projection, and/or at least one recess, located at the end side in the stator pole carrier (3) of the first stator (1') and embodied as an external recess, is/are moved into a corresponding position with, in each case, a recess which is located at the end side in the stator pole carrier (3) of the second stator (1") and is embodied as an external recess, and/or with, in each case, a projection which is located at the end side in the stator pole carrier (3) of the second stator (1") and is embodied as an external projection.

17. Method according to Claim 15 or according to Claim 16, **characterized in that** the winding (17) is wound before the positioning.

18. Use of a method according to one of Claims 15 to 17 for the scaled construction of an electric machine, preferably of a transversal flow generator or a transversal flow motor according to one of Claims 11 to 14, using a stator (1, 1', 1") according to one of Claims 1 to 10.

## Revendications

1. Stator (1, 1', 1") pour une machine électrique (21) assemblable, de préférence réversible, comprenant au moins un rotor (16), le stator (1, 1', 1")
- étant réalisé sous la forme d'un corps pourvu d'au moins une traversée (2), lequel possède au moins un matériau ferromagnétique, et
- possédant en outre :
- au moins une zone réalisée sous la forme d'un support de pôle de stator (3), laquelle entoure au moins partiellement un axe central (9) du stator (1, 1', 1"),
- au moins un premier pôle de stator (4) comprenant au moins un premier flanc (5) et un deuxième flanc (6), ainsi-qu'au moins un deuxième pôle de stator (7),
- les pôles de stator, de préférence orientés sensiblement le long d'une direction radiale, étant disposés directement ou indirectement sur le support de pôle de stator (3)
**caractérisé en ce que**
- la densité du matériau du stator (1, 1', 1") est réglée en fonction de l'emplacement, et ce en vue de fournir une résistance magnétique réglée en fonction de l'emplacement et
- **en ce que** le stator (1, 1', 1") possède un matériau identique,
- la résistance magnétique étant réglée directement par une densité modifiée en fonction de l'emplacement du matériau identique du stator (1, 1', 1").

2. Stator (1, 1', 1") selon la revendication 1, **caractérisé en ce que** le premier pôle de stator (4) est asymétrique par rapport à chaque plan contenant l'axe central (9) du stator (1, 1', 1") et présente une courbure avec flexibilité sensiblement continue par rapport à ce plan à mesure que l'écart du support de pôle de stator (3) augmente.

3. Stator (1, 1', 1") selon la revendication 1 ou 2, **caractérisé en ce que** le premier flanc (5) et/ou le deuxième flanc (6) est biseauté sur au moins une zone de hauteur (10) du premier pôle de stator (4) par rapport à l'axe central (9) du stator (1, 1', 1"), le biseautage étant formé dans un tracé discret ou continu ou une combinaison des deux.

4. Stator (1, 1', 1") selon l'une des revendications précédentes, **caractérisé en ce que** le premier pôle de stator (4), avec au moins un plan de section côté frontal, correspond au moins à un plan de section côté frontal d'une zone magnétique dure du rotor (16).

5. Stator (1, 1', 1") selon l'une des revendications précédentes, **caractérisé en ce qu'**une zone du stator (1, 1', 1") qui entoure au moins partiellement l'axe central (9) possède une hauteur réduite par rapport à au moins une zone voisine adjacente à cette zone en vue d'accueillir au moins partiellement au moins un enroulement (17).

6. Stator (1, 1', 1") selon l'une des revendications précédentes, **caractérisé en ce que** le support de pôle de stator (3) du stator (1, 1', 1") possède au moins dans certaines zones au moins une cavité (14), de préférence orientée sensiblement dans une direction parallèle à l'axe central (9), et/ou au moins une partie en saillie (15), de préférence orientée dans une direction sensiblement parallèle à l'axe central (9).

7. Stator (1, 1', 1") selon l'une des revendications précédentes, **caractérisé en ce qu'**au moins le premier pôle de stator (4) et le deuxième pôle de stator (7) sont reliés ensemble par le biais d'au moins une contrefiche (11) et **en ce que** la contrefiche (11) est disposée de manière au moins partiellement périphérique par rapport à l'axe central (9) du stator (1, 1', 1"), de préférence sensiblement coaxiale par rapport à l'axe central (9), la contrefiche (11) possédant au moins dans certaines portions un rétrécissement (12) dans une direction sensiblement parallèle à l'axe central (9) et/ou la contrefiche (11) possédant au moins dans certaines zones par le biais une densité réduite par rapport aux zones adjacentes de la contrefiche (11).

8. Stator (1, 1', 1") selon l'une des revendications précédentes, **caractérisé en ce qu'**une distribution des enroulements des pôles de stator (4, 7), une configuration des pôles de stator (4, 7) et/ou une distribution de la densité des pôles de stator (4, 7) sont réglées conformément à une courbe de couple souhaitée pendant le déroulement d'un tour du rotor (16).

9. Stator (1, 1', 1") selon l'une des revendications précédentes, **caractérisé en ce que** le stator (1, 1', 1") est fabriqué par métallurgie des poudres à partir d'un matériau magnétique doux, de préférence à partir d'un matériau SMC, de préférence d'une seule pièce.

10. Stator (1, 1', 1") selon l'une des revendications précédentes, **caractérisé en ce qu'**un matériau austénitique, de préférence un acier au CrNi austénitique, est disposé au moins dans certaines zones à l'intérieur d'un espace qui se trouve entre deux pôles de stator (4, 7) voisins.

11. Machine électrique, comprenant au moins une paire de stators composée d'un premier stator (1, 1', 1") et d'un deuxième stator (1, 1', 1") respectivement selon l'une des revendications 1 à 10, au moins un premier rotor (16) qui se trouve dans un espace creux formé par le premier stator (1, 1', 1") et le deuxième stator (1, 1', 1"), au moins un enroulement métallique (17) périphérique par rapport au rotor (16) au moins dans une zone d'une hauteur du rotor (16), le premier stator (1, 1', 1") et le deuxième stator (1, 1', 1") étant positionnés en angle l'une par rapport à l'autre par au moins une partie en saillie (15) qui se trouve du côté frontal dans le support de pôle de stator (3) du premier stator (1, 1', 1") et/ou par au moins une cavité (14) qui se trouve du côté frontal dans le support de pôle de stator (3) du premier stator (1, 1', 1") en coopération avec des parties en saillie (15) et/ou des cavités (14) correspondantes qui se trouvent du côté frontal dans le support de pôle de stator (3) du deuxième stator (1, 1', 1").

12. Machine électrique selon la revendication 11, **caractérisée en ce qu'**une pluralité d'au moins deux paires de stators, de préférence deux paires identiques, sont disposées l'une derrière l'autre, la première paire de stators et la deuxième paire de stators étant positionnées en angle l'une par rapport à l'autre par au moins une partie en saillie réalisée sous la forme d'une partie en saillie vers l'extérieur qui se trouve du côté frontal dans un support de pôle de stator (3) de la première paire de stators et/ou par au moins une cavité réalisée sous la forme d'une cavité extérieure qui se trouve du côté frontal dans un support de pôle de stator (3) de la première paire de stators en coopération avec des parties en saillie correspondantes réalisées sous la forme de parties en saillie vers l'extérieur et/ou des cavités réalisées sous la forme de cavités extérieures dans un support de pôle de stator (3) de la deuxième paire de stators et le positionnement en angle entre la première paire de stators et la deuxième paire de stators étant choisie en fonction d'un déphasage souhaité.

13. Machine électrique selon la revendication 11 ou la revendication 12, **caractérisée en ce que** l'enroulement (17) est réalisé sous la forme d'un enroulement en anneau et il est largement, de préférence entièrement exempt de matériau isolant et/ou **en ce que** l'enroulement (17) ne possède quasiment aucune, de préférence aucune tête d'enroulement.

14. Machine électrique selon l'une des revendications 11 à 13, **caractérisée en ce que** le premier stator (1") et le deuxième stator (1") présentent une configuration identique.

15. Procédé d'assemblage d'une machine électrique, de préférence tubulaire, selon l'une des revendications 11 à 14 par assemblage d'au moins une paire de stators, lequel inclut au moins la séquence d'étapes suivante :
- positionnement d'un rotor (16) dans un espace creux d'un premier stator (1'),
- positionnement d'un enroulement métallique (17) dans une zone ayant une hauteur réduite par rapport aux zones adjacentes du premier stator (1'), l'enroulement métallique (17) étant périphérique au moins sur une zone axiale à la zone prévue pour le rotor (16), de préférence sensiblement coaxiale,
- positionnement du premier stator (1') au moins dans une complémentarité de formes avec le deuxième stator (1"), un positionnement angulaire défini du premier stator (1') et du deuxième stator (1") l'un par rapport à l'autre étant ainsi réalisé en ce qu'au moins une partie en saillie (15) qui se trouve du côté frontal dans le support de pôle de stator (3) du premier stator (1') et/ou au moins une cavité (14) qui se trouve du côté frontal dans le support de pôle de stator (3) du premier stator (1') est/sont amenée(s) en position correspondante avec respectivement une cavité (14) qui se trouve du côté frontal dans le support de pôle de stator (3) du deuxième stator (1") et/ou avec respectivement une partie en saillie (15) qui se trouve du côté frontal dans le support de pôle de stator (3) du deuxième stator (1").

16. Procédé selon la revendication 15, selon lequel au moins une première paire de stators et une deuxième paire de stators sont positionnées l'une derrière l'autre au moins par complémentarité de formes, un positionnement angulaire défini de la première paire de stators et de la deuxième paire de stators étant ainsi réalisé en ce qu'au moins une partie en saillie réalisée sous la forme d'une partie en saillie vers l'extérieur qui se trouve du côté frontal dans le support de pôle de stator (3) du premier stator (1') et/ou au moins une cavité réalisée sous la forme d'une cavité extérieure qui se trouve du côté frontal dans le support de pôle de stator (3) du premier stator (1') est/sont amenée(s) dans une position correspondante avec respectivement une cavité réalisée sous la forme d'une cavité extérieure qui se trouve du côté frontal dans le support de pôle de stator (3) du deuxième stator (1") et/ou avec respectivement une partie en saillie réalisée sous la forme d'une partie en saillie vers l'extérieur qui se trouve du côté frontal dans le support de pôle de stator (3) du deuxième stator (1").

17. Procédé selon la revendication 15 ou selon la revendication 16, **caractérisé en ce que** l'enroulement (17) est bobiné avant le positionnement.

18. Utilisation d'un procédé selon l'une des revendications 15 à 17 pour la construction mise à l'échelle d'une machine électrique, de préférence d'un générateur à flux transversal ou d'un moteur à flux transversal, selon l'une des revendications 11 à 14, en utilisant un stator (1, 1', 1") selon l'une des revendications 1 à 10.
